# EUROPEAN PATENT SPECIFICATION

(11) **EP 3 199 435 B1**
(45) Date of publication and mention of the grant of the patent: **01.08.2018**
(21) Application number: 16192328.9
(22) Date of filing: 05.10.2016
(51) Int. Cl.: B62J 1/28, B62J 27/00

(54) **STRADDLED VEHICLE**
GRÄTSCHSITZFAHRZEUG
VÉHICULE MONTÉ À CALIFOURCHON

(30) Priority: 29.01.2016 JP 2016016307
(43) Date of publication of application: 02.08.2017
(73) Proprietor: Yamaha Hatsudoki Kabushiki Kaisha, Iwata-shi, Shizuoka 438-8501 (JP)
(72) Inventor: GOUDA, Yukikazu, Iwata-shi, Shizuoka 438-8501 (JP)
(74) Representative: Grünecker Patent- und Rechtsanwälte PartG mbB

(56) References cited:
- EP-A1- 1 640 257
- EP-A1- 2 301 832
- WO-A1-2015/084272
- CA-A1- 2 439 518

## Description

### BACKGROUND OF THE INVENTION

### 1. Field of the Invention

The present invention relates to a straddled vehicle.

### 2. Description of the Related Art

There is a type of straddled vehicle provided with a grab bar designed to be grabbed by a tandem passenger. In general, the grab bar is required to support the body of the tandem passenger. Hence, the position of the grab bar is designed to enable the tandem passenger to easily grab the grab bar. Additionally, the grab bar is fixed to a seat frame disposed under a seat.

For example, in a straddled vehicle described in Japan Laid-open Patent Application Publication No. 2014-166803, a pair of attachment members is inserted between a seat and a side cover in order to attach a grab bar to a seat frame. On the other hand, in a motorcycle described in Japan Laid-open Patent Application Publication No. 2009-161013, a side cover is provided with a pair of holes, and a pair of attachment portions of a grab bar is inserted through the holes and is disposed in place.

### SUMMARY OF THE INVENTION

In the straddled vehicle described in Japan Laid-open Patent Application Publication No. 2014-166803, front grab portions of the grab bar are disposed higher than the lower edge of the seat in a vehicle side view. Therefore, the legs of the tandem passenger are likely to make contact with the front grab portions. This causes a drawback of degradation in comfortableness of the tandem passenger.

In light of this, the inventor of the present invention conceived a construction that the front grab portions are disposed lower than the seat in a vehicle side view, focusing on the fact that it is more important for the front grab portions to function as portions to be attached to a vehicle body rather than as portions to be grabbed.

To dispose the front grab portions in lower positions than the seat, it is conceivable to lower the positions of the holes of the side cover in the construction that the attachment portions of the grab bar are inserted through the holes and are disposed in place as described in Japan Laid-open Patent Application Publication No. 2009-161013. In this case, however, there exists a drawback of increase in manufacturing cost due to necessity of boring holes in the side cover. Additionally, in detachment of the side cover, it is required to detach the grab bar integrally with the side cover. Hence, there also exists a drawback of degradation in maintenance performance.

European Patent Application EP 1640257A1 discloses a straddled vehicle according to the preamble of claim 1. It is an object of the present invention to enhance comfortableness of a tandem passenger and simultaneously inhibit increase in manufacturing cost and degradation in maintenance performance in a straddled vehicle.

A straddled vehicle according to the present aspect includes a seat frame, a seat, a grab bar, a left side cover assembly and a right side cover assembly. The seat is disposed over the seat frame, and is supported by the seat frame. The grab bar is a member designed to be grabbed by a tandem passenger. The left side cover assembly is disposed leftward of the seat frame. The right side cover assembly is disposed rightward of the seat frame.

The grab bar includes a left attachment portion, a left front grab portion, a right attachment portion and a right front grab portion. The left attachment portion is attached to the seat frame. The left front grab portion is located forward of a rear end of the seat in a vehicle side view. The right attachment portion is attached to the seat frame. The right front grab portion is located forward of the rear end of the seat in the vehicle side view.

The left side cover assembly includes a first left side cover and a second left side cover. The second left side cover is provided separately from the first left side cover. The second left side cover is disposed in front of the first left side cover, and is connected to the first left side cover. The right side cover assembly includes a first right side cover and a second right side cover. The second right side cover is provided separately from the first right side cover. The second right side cover is disposed in front of the first right side cover, and is connected to the first right side cover.

The first left side cover includes a left cutout downwardly recessed from an upper edge thereof. The first right side cover includes a right cutout downwardly recessed from an upper edge thereof. The left attachment portion is disposed in the left cutout. The right attachment portion is disposed in the right cutout. The second left side cover at least partially overlaps with the left cutout in a vehicle plan view. The second right side cover at least partially overlaps with the right cutout in the vehicle plan view. The second left side cover is at least partially disposed over the left front grab portion in the vehicle side view. The second right side cover is at least partially disposed over the right front grab portion in the vehicle side view.

In the straddled vehicle according to the present aspect, the left attachment portion of the grab bar is disposed in the left cutout, whereas the right attachment portion of the grab bar is disposed in the right cutout. Therefore, the right and left front grab portions of the grab bar can be disposed lower than those in a construction that the cutouts are not provided. This makes the legs of the tandem passenger unlikely to make contact with the right and left front grab portions. Accordingly, comfortableness of the tandem passenger can be enhanced.

Additionally, increase in manufacturing cost can be inhibited in comparison with a construction that the side covers are provided with holes. Moreover, when detached from the vehicle, the right and left side covers can be removed separately from the grab bar. Hence, degradation in maintenance performance can be inhibited.

Now, the inventor of the present invention found that when the right and left cutouts are largely recessed downward so as to locate the right and left front grab portions in low positions, gaps are produced between the seat and the side covers and this results in a drawback regarding intrusion of foreign objects into the vehicle body or regarding theft of items from the vehicle.

In light of this, the second left side cover of the straddled vehicle according to the present aspect is disposed as described above, whereby the gap produced by the left cutout can be at least partially covered with the second left side cover. Likewise, the second right side cover is disposed as described above, whereby the gap produced by the right cutout can be at least partially covered with the second right side cover. Accordingly, it is possible to solve the drawback regarding intrusion of foreign objects into the vehicle body or regarding theft of items from the vehicle.

Moreover, the second left side cover is disposed over the left front grab portion. Hence, the second left side cover makes the left leg of the tandem passenger further unlikely to make contact with the left front grab portion. Likewise, the second right side cover is disposed over the right front grab portion. Hence, the second right side cover makes the right leg of the tandem passenger further unlikely to make contact with the right front grab portion. Accordingly, comfortableness of the tandem passenger can be further enhanced.

The left front grab portion may at least partially overlap with the left cutout in the vehicle side view. The right front grab portion may at least partially overlap with the right cutout in the vehicle side view. In this case, the gap produced by the left cutout can be covered with the second left side cover and the left front grab portion. Likewise, the gap produced by the right cutout can be covered with the second right side cover and the right front grab portion.

A front end of the left front grab portion may be located forward of a rear end of the second left side cover. A front end of the right front grab portion may be located forward of a rear end of the second right side cover. In this case, the gap produced by the left cutout can be covered with the second left side cover and the left front grab portion. Likewise, the gap produced by the right cutout can be covered with the second right side cover and the right front grab portion.

The rear end of the second left side cover may be located between the seat and the left front grab portion in the vehicle side view. The rear end of the second right side cover may be located between the seat and the right front grab portion in the vehicle side view. In this case, the gap produced between the seat and the left front grab portion can be covered with the rear end of the second left side cover. Likewise, the gap produced between the seat and the right front grab portion can be covered with the rear end of the second right side cover.

The left front grab portion and the right front grab portion may extend obliquely downward to the front. A bottom of the left cutout and a bottom of the right cutout may forwardly tilt down. In this case, the left front grab portion and the left cutout extend in approximately the same direction. Hence, the gap produced by the left cutout is easily covered with the left front grab portion. Likewise, the right front grab portion and the right cutout extend in approximately the same direction. Hence, the gap produced by the right cutout is easily covered with the right front grab portion.

The left attachment portion may be located lower than the upper edge of the first left side cover. The right attachment portion may be located lower than the upper edge of the first right side cover. In this case, even when the right and left attachment portions are disposed in low positions as described above, elongation of the right and left attachment portions can be inhibited by the right and left cutouts herein provided.

The straddled vehicle may further include a seat lock latch and a seat lock catch. The seat lock latch may be attached to the seat. The seat lock catch may be attached to the seat frame and may be provided to be engageable with the seat lock latch. A lower end of the left cutout and a lower end of the right cutout may be located lower than a position in which the seat lock latch and the seat lock catch are engaged.

In this case, the positions of the right and left front grab portions can be lowered by forming the right and left cutouts in shapes largely recessed downward. Accordingly, comfortableness of the tandem passenger can be enhanced. Additionally, access to the seat lock latch and the seat lock catch can be prevented with the right and left second side covers.

The seat lock latch may at least partially overlap with the left cutout in the vehicle side view. The seat lock latch may at least partially overlap with the right cutout in the vehicle side view. In this case, the positions of the right and left front grab portions can be lowered by forming the right and left cutouts in shapes largely recessed downward. Accordingly, comfortableness of the tandem passenger can be enhanced. Additionally, access to the seat lock latch and the seat lock catch can be prevented with the right and left second side covers.

A front edge of the left front grab portion may forwardly tilt down in the vehicle side view. A rear edge of the second left side cover may be opposed to the front edge of the left front grab portion and may forwardly tilt down in the vehicle side view. A front edge of the right front grab portion may forwardly tilt down in the vehicle side view. A rear edge of the second right side cover may be opposed to the front edge of the right front grab portion and may forwardly tilt down in the vehicle side view.

In this case, the rear edge of the second left side cover is opposed to the front edge of the left front grab portion, and simultaneously, tilts in approximately the same direction as the front edge of the left front grab portion. Hence, the second left side cover and the left front grab portion can be disposed in smooth continuation to each other. The construction can make the left leg of the tandem passenger unlikely to make contact with the left front grab portion. Likewise, the rear edge of the second right side cover is opposed to the front edge of the right front grab portion, and simultaneously, tilts in approximately the same direction as the front edge of the right front grab portion. Hence, the second right side cover and the right front grab portion can be disposed in smooth continuation to each other. The construction can make the right leg of the tandem passenger unlikely to make contact with the right front grab portion.

### BRIEF DESCRIPTION OF THE DRAWINGS

FIG. 1 is a left side view of a straddle vehicle.
FIG. 2 is a top view of the straddled vehicle.
FIG. 3 is a left side view of a rear portion of the straddled vehicle.
FIG. 4 is a right side view of the rear portion of the straddled vehicle.
FIG. 5 is a top view of the rear portion of the straddled vehicle from which a seat is detached.
FIG. 6 is a perspective view of the rear portion of the straddled vehicle without illustration of the seat.
FIG. 7 is a top view of the rear portion of the straddled vehicle without illustration of a grab bar.
FIG. 8 is a perspective view of the grab bar.
FIG. 9 is a top view of the grab bar.
FIG. 10 is a left side view of the grab bar.
FIG. 11 is a side view of a left side cover assembly.
FIG. 12 is a cross-sectional view of FIG. 3 taken along XII-XII.
FIG. 13 is a top view of the rear portion of the straddled vehicle to which an inner cover is attached without illustration of the seat.
FIG. 14 is a left side view of the rear portion of the straddled vehicle without illustration of the grab bar.

### DETAILED DESCRIPTION OF THE PREFERRED EMBODIMENTS

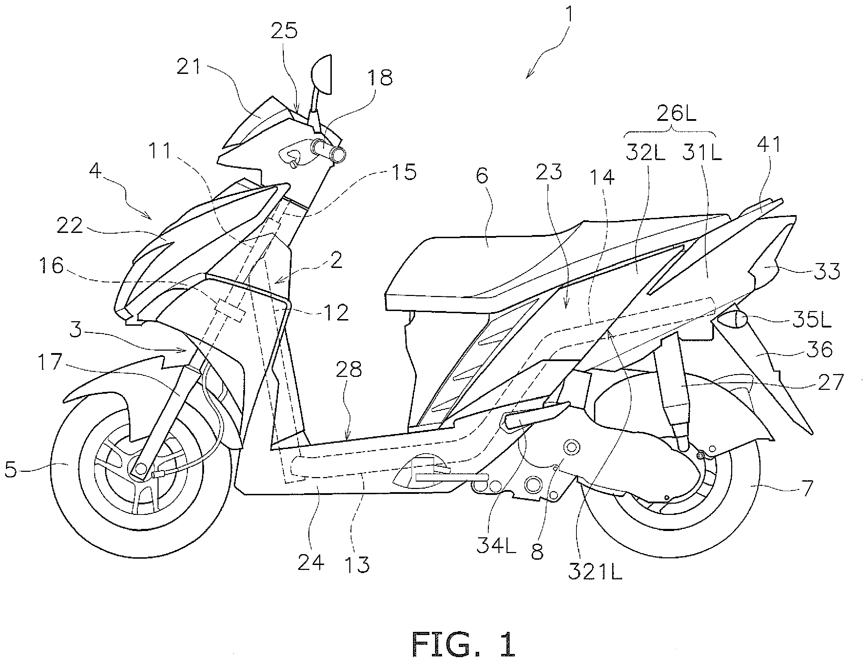

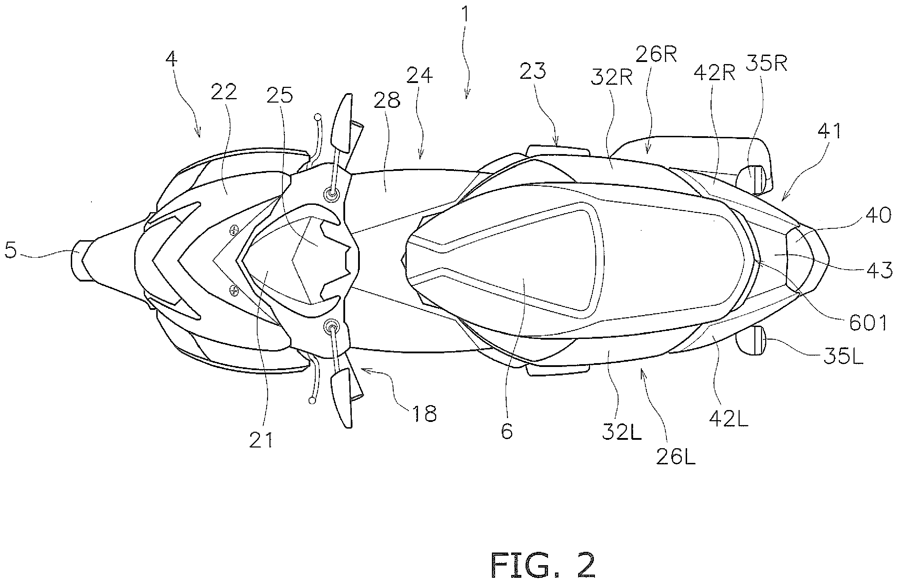

A straddled vehicle according to a preferred embodiment will be hereinafter explained with reference to drawings. FIG. 1 is a left side view of a straddled vehicle 1 according to the preferred embodiment. FIG. 2 is a top view of the straddled vehicle 1. The straddled vehicle 1 according to the present preferred embodiment is a scooter-type vehicle. As shown in FIG. 1, the straddled vehicle 1 includes a vehicle body frame 2, a steering device 3, a vehicle body cover 4, a front wheel 5, a seat 6, a rear wheel 7 and a drive unit 8.

It should be noted that in the present specification, a back-and-forth direction of the straddled vehicle 1, an up-and-down direction of the straddled vehicle 1 and a right-and-left direction of the straddled vehicle 1 refer to a back-and-forth direction, an up-and-down direction and a right-and-left direction seen from a rider on the straddled vehicle 1. Additionally, the back-and-forth direction not only indicates directions arranged in parallel to the back-and-forth direction of the straddled vehicle 1, but also encompasses directions tilting within an angular range of ±45 degrees with respect to the back-and-forth direction of the straddled vehicle 1. In other words, a given direction closer to the back-and-forth direction than to the right-and-left direction and the up-and-down direction is classified as the back-and-forth direction.

Likewise, the up-and-down direction encompasses directions tilting within an angular range of ±45 degrees with respect to the up-and-down direction of the straddled vehicle 1. In other words, a given direction closer to the up-and-down direction than to the back-and-forth direction and the right-and-left direction is classified as the up-and-down direction.

Moreover, the right-and-left direction encompasses directions tilting within an angular range of ±45 degrees with respect to the right-and-left direction of the straddled vehicle 1. In other words, a given direction closer to the right-and-left direction than to the back-and-forth direction and the up-and-down direction is classified as the right-and-left direction.

In the present preferred embodiment, the term "vehicle width directionally inward" means directions approaching along the vehicle width direction to an axis that passes through the center of the vehicle in the vehicle width direction and extends in the back-and-forth direction. On the other hand, the term "vehicle width directionally outward" means directions arranged along the vehicle width direction in opposition to the directions meant by the term "vehicle width directionally inward". In other words, the term "vehicle width directionally outward" means directions separating from the axis that passes through the center of the vehicle in the vehicle width direction and extends in the back-and-forth direction.

The vehicle body frame 2 includes a head pipe 11, a down frame 12, a lower frame 13 and a seat frame 14. The down frame 12 extends downward from the head pipe 11. The lower frame 13 is connected to a lower portion of the down frame 12. The lower frame 13 extends backward from the lower portion of the down frame 12. The seat frame 14 is connected to the lower frame 13. The seat frame 14 extends backward and upward from a rear portion of the lower frame 13.

The steering device 3 includes a steering shaft 15, a bracket 16 and right and left suspensions 17. The steering shaft 15 is inserted into the head pipe 11. The steering shaft 15 is supported by the head pipe 11 and is thereby turnable right and left. The steering shaft 15 is connected at its lower portion to the right and left suspensions 17 through the bracket 16. The suspensions 17 support the front wheel 5 such that the front wheel 5 is rotatable. The steering shaft 15 is connected at its upper portion to a handle 18. The handle 18 is supported by the upper end portion of the steering shaft 15.

The vehicle body cover 4 includes a handle cover 21, a front cover 22, a rear cover 23 and a lower cover 24. The handle cover 21 covers the front and rear sides of the handle 18. A meter panel 25 is attached to the upper surface of the handle cover 21. The meter panel 25 includes, for instance, a speed meter. The front cover 22 is disposed lower than the handle cover 21. The front cover 22 covers the surroundings of the head pipe 11 and the down frame 12.

The rear cover 23 covers the surroundings of the seat frame 14. As shown in FIG. 2, the rear cover 23 includes a left side cover assembly 26L and a right side cover assembly 26R. As shown in FIG. 1, the left side cover assembly 26L is disposed leftward of the seat frame 14. In the vehicle side view, the left side cover assembly 26L is disposed under the seat 6. Similarly to the left side cover assembly 26L, the right side cover assembly 26R is disposed rightward of the seat frame 14. In the vehicle side view, the right side cover assembly 26R is disposed under the seat 6.

The seat 6 is disposed backward of the head pipe 11. The seat 6 is disposed over the seat frame 14. The seat 6 is supported by the seat frame 14. The seat 6 is supported by the seat frame 14 through a stay (not shown in the drawings) and a storage 37 (to be described). Alternatively, the seat 6 may be directly supported by the seat frame 14.

The lower cover 24 is disposed between the front cover 22 and the rear cover 23. The lower cover 24 covers the surroundings of the lower frame 13. The lower cover 24 includes a footboard 28 as portion of its upper surface. The footboard 28 is disposed lower than and forward of the seat 6. The footboard 28 is disposed over the lower frame 13. The footboard 28 is provided for allowing a rider to put his/her feet thereon. The footboard 28 has a flat shape. It should be noted that the shape of the footboard 28 is not limited to this. For example, the footboard 28 may be shaped such that its vehicle width directional middle portion protrudes in an upwardly convex shape.

The drive unit 8 is disposed under the seat 6. The drive unit 8 is pivotably supported by the vehicle body frame 2. The drive unit 8 includes, for instance, an engine and a transmission. The drive unit 8 supports the rear wheel 7 such that the rear wheel 7 is rotatable. The rear wheel 7 is supported by the vehicle body frame 2 through a rear suspension 27.

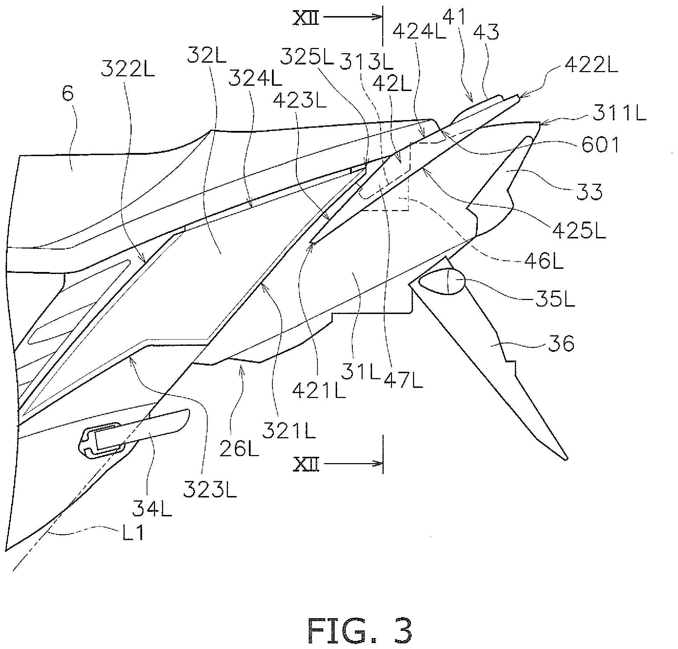

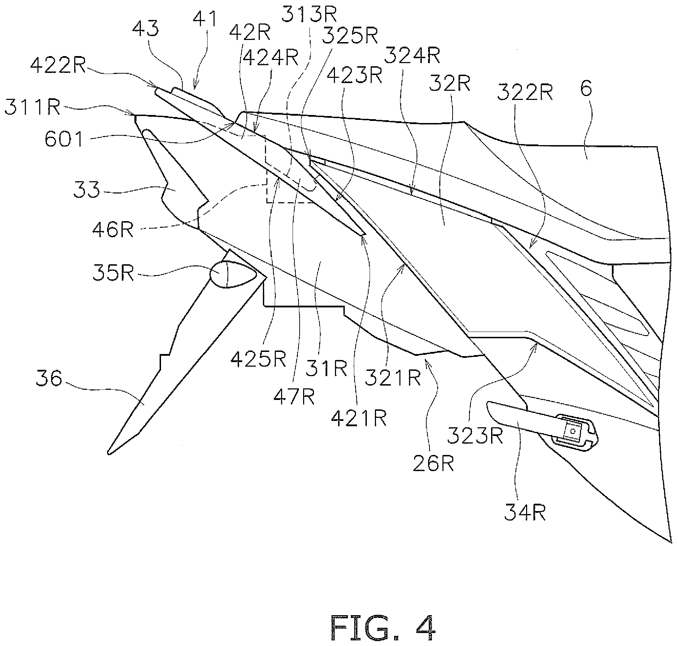

FIG. 3 is a left side view of a rear portion of the straddled vehicle 1. FIG. 4 is a right side view of the rear portion of the straddled vehicle 1. As shown in FIG. 3, the left side cover assembly 26L includes a first left side cover 31L and a second left side cover 32L.

In the vehicle side view, the first left side cover 31L is located over the rear wheel 7. A tail light 33 is attached to the first left side cover 31L. In the vehicle side view, a rear end 311L of the first left side cover 31L is located backward of a rear end 601 of the seat 6. A left rear flasher 35L is disposed under the first left side cover 31L. A rear fender 36 is disposed under the first left side cover 31L.

The second left side cover 32L is provided separately from the first left side cover 31L. The second left side cover 32L is disposed in front of the first left side cover 31L, and is connected to the first left side cover 31L. A rear edge 321L of the second left side cover 32L forwardly tilts down.

A left tandem step 34L is disposed under the second left side cover 32L. The left tandem step 34L is a component allowing a tandem passenger to put his/her foot. The left tandem step 34L is configured to be changeable between a deployed state and a retracted state. In FIG. 3, the left tandem step 34L is in the retracted state. Although not shown in the drawings, the left tandem step 34L is configured to protrude leftward in the deployed state.

In the vehicle side view, an extended line L1 of the rear edge 321L of the second left side cover 32L at least intersects with the left tandem step 34L of the retracted state. In the vehicle side view, the extended line L1 of the rear edge 321L of the second left side cover 32L may intersect with the left tandem step 34L of the deployed state.

Similarly to the rear edge 321L, a front edge 322L of the second left side cover 32L forwardly tilts down. The front edge 322L of the second left side cover 32L extends to a position located lower than and forward of the rear edge 321L. A lower edge 323L of the second left side cover 32L has an upwardly bending shape. The lower edge 323L of the second left side cover 32L is located over the left tandem step 34L. An upper edge 324L of the second left side cover 32L forwardly tilts down. The upper edge 324L of the second left side cover 32L is disposed along the lower edge of the seat 6.

As shown in FIG. 4, the right side cover assembly 26R includes a first right side cover 31R and a second right side cover 32R. The second right side cover 32R is provided separately from the first right side cover 31R. The second right side cover 32R is disposed in front of the first right side cover 31R, and is connected to the first right side cover 31R. A right rear flasher 35R is disposed under the first right side cover 31R. A right tandem step 34R is disposed under the second right side cover 32R.

The right side cover assembly 26R is provided bilaterally symmetric to the left side cover assembly 26L. Hence, detailed explanation thereof will not be provided. It should be noted that in FIG. 4, a given constituent element of the right side cover assembly 26R is assigned a reference sign that includes a numeral used as portion of a reference sign assigned to the corresponding constituent element of the left side cover assembly 26L.

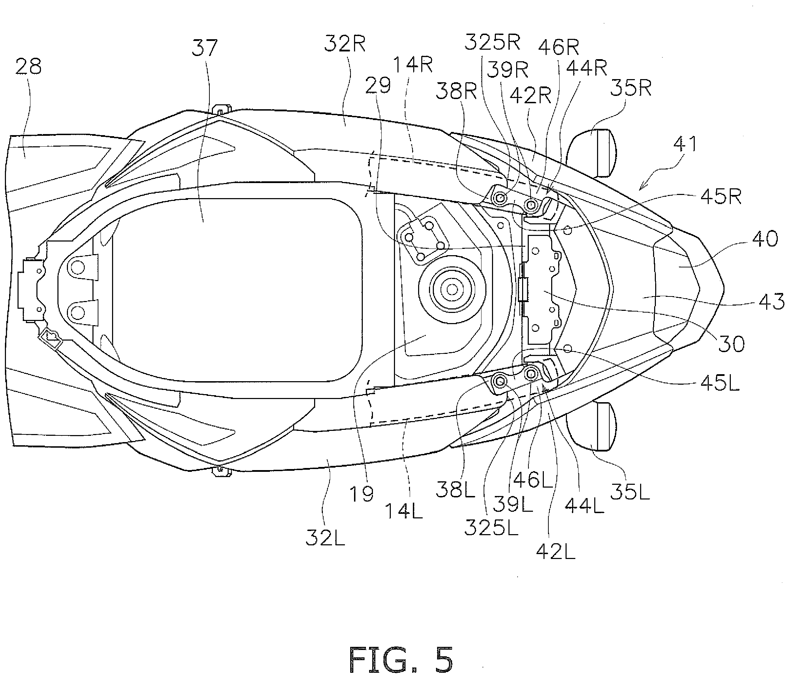

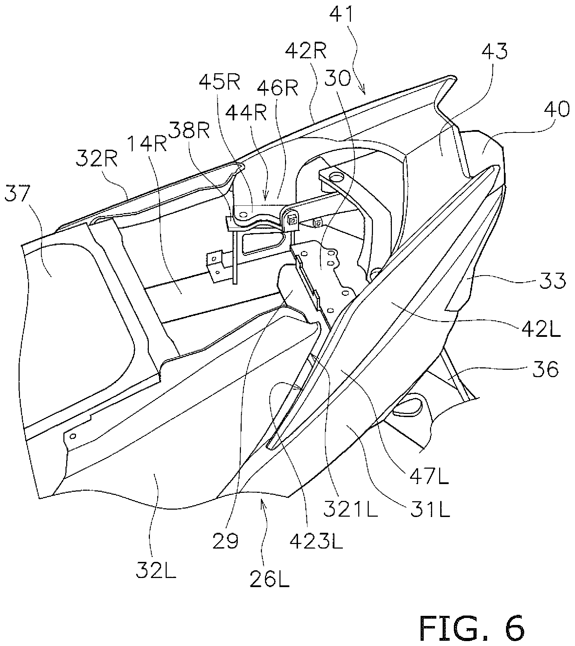

FIG. 5 is a top view of the rear portion of the straddled vehicle 1 without illustration of the seat 6. FIG. 6 is a perspective view of the rear portion of the straddled vehicle 1 without illustration of the seat 6. As shown in FIGS. 5 and 6, the storage 37 is disposed under the seat 6. As shown in FIG. 5, in the vehicle plan view, a fuel tank 19 is disposed behind the storage 37. It should be noted that an inner cover 20 (to be described) is not illustrated in FIGS. 5 and 6.

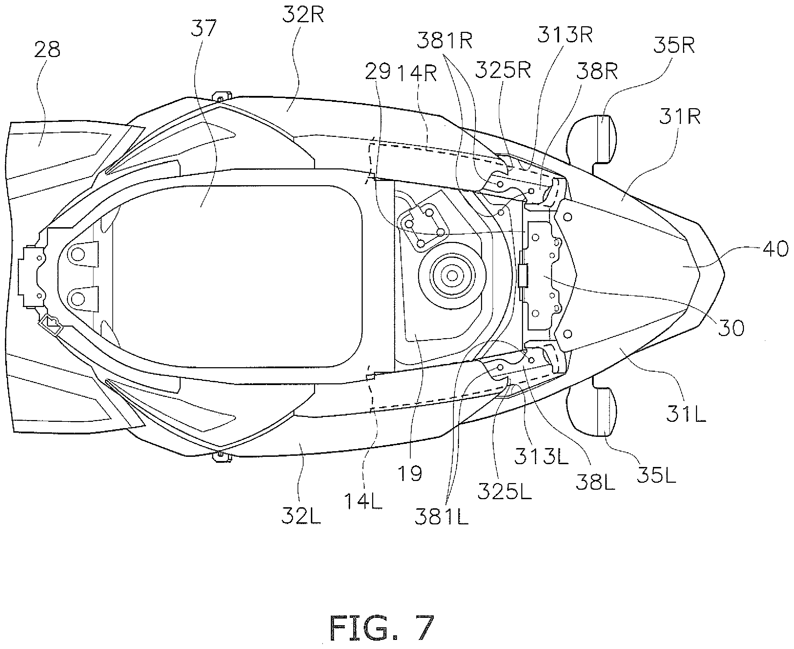

FIG. 7 is a top view of the rear portion of the straddled vehicle 1 without illustration of a grab bar 41. As shown in FIG. 7, a tail light cover 40 is disposed between the first left side cover 31L and the first right side cover 31R. The tail light cover 40 is disposed over the tail light 33.

The tail light cover 40 is provided separately from the first left side cover 31L and the first right side cover 31R. The tail light cover 40 is connected to the first left side cover 31L and the first right side cover 31R. Alternatively, the tail light cover 40 may be integrated with the first left side cover 31L and the first right side cover 31R.

As shown in FIGS. 3 to 6, the straddled vehicle 1 includes the grab bar 41. The grab bar 41 is a member designed to be grabbed by a tandem passenger. At least portion of the grab bar 41 is located backward of the rear end 601 of the seat 6.

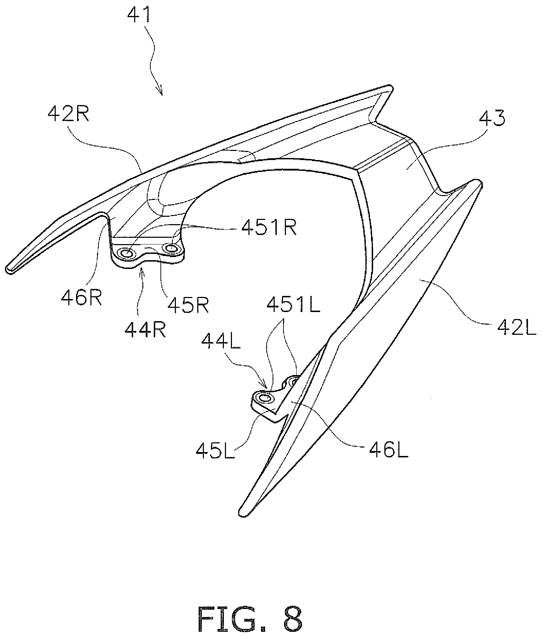

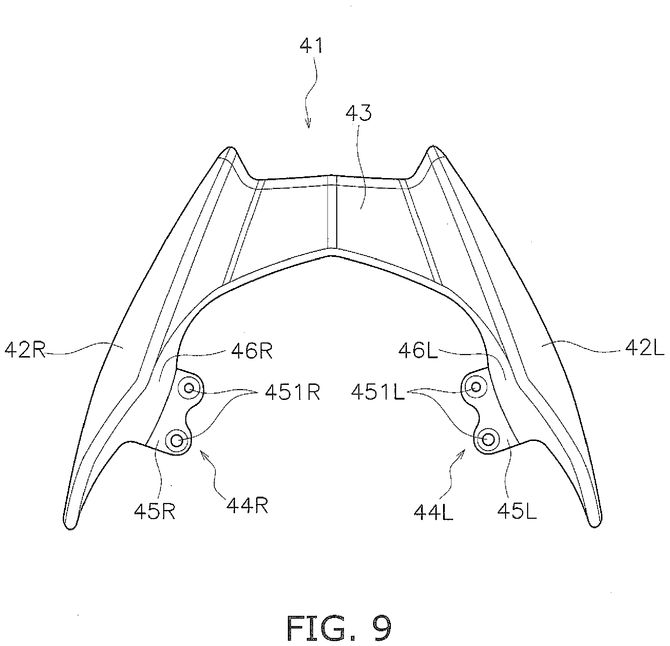

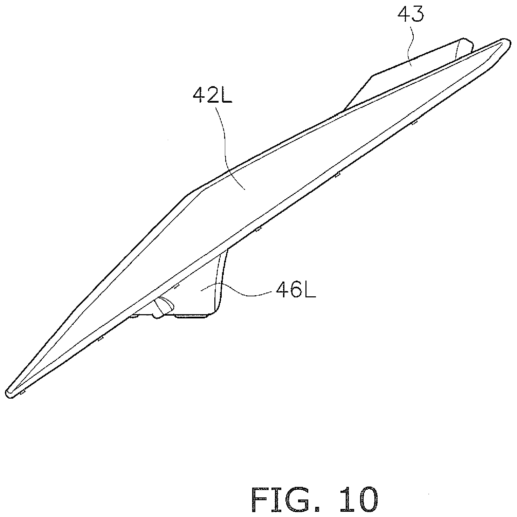

FIG. 8 is a perspective view of the grab bar 41. FIG. 9 is a top view of the grab bar 41. FIG. 10 is a left side view of the grab bar 41. As shown in FIGS. 8 to 10, the grab bar 41 includes a left grab portion 42L, a right grab portion 42L and a middle grab portion 43.

As shown in FIG. 3, at least portion of the left grab portion 42L is disposed on the left of the first left side cover 31L. In the vehicle side view, at least portion of the left grab portion 42L overlaps with the first left side cover 31L. In the vehicle side view, the left grab portion 42L extends obliquely upward to the rear. A front end 421L of the left grab portion 42L is located forward of the rear end 601 of the seat 6. The front end 421L of the left grab portion 42L is located lower than the seat 6. A rear end 422L of the left grab portion 42L is located backward of the rear end 601 of the seat 6. The rear end 422L of the left grab portion 42L is located higher than the seat 6.

In the vehicle side view, a front edge 423L of the left grab portion 42L forwardly tilts down. In the vehicle side view, an upper edge 424L of the left grab portion 42L forwardly tilts down. In the vehicle side view, a lower edge 425L of the left grab portion 42L forwardly tilts down. In the vehicle side view, the left grab portion 42L is made in the shape of an approximate triangle enclosed by the front edge 423L, the upper edge 424L and the lower edge 425L.

As shown in FIG. 4, at least portion of the right grab portion 42R is disposed on the right of the first right side cover 31R. In the vehicle side view, at least portion of the right grab portion 42R overlaps with the first right side cover 31R. In the vehicle side view, the right grab portion 42R extends obliquely upward to the rear. A front end 421R of the right grab portion 42R is located forward of the rear end 601 of the seat 6. The front end 421R of the right grab portion 42R is located lower than the seat 6. A rear end 422R of the right grab portion 42R is located backward of the rear end 601 of the seat 6. The rear end 422R of the right grab portion 42R is located higher than the seat 6.

The right grab portion 42R is bilaterally symmetric to the left grab portion 42L. Therefore, a front edge 423R, an upper edge 424R and a lower edge 425R of the right grab portion 42R are made in similar shapes to the front edge 423L, the upper edge 424L and the lower edge 425L of the left grab portion 42L.

As shown in FIG. 5, in the vehicle plan view, the left grab portion 42L obliquely extends backward and vehicle width directionally inward. In the vehicle plan view, the outer surface of the left grab portion 42L curves and smoothly continues to the curving outer surface of the second left side cover 32L. In the vehicle plan view, the right grab portion 42R obliquely extends backward and vehicle width directionally inward. In the vehicle plan view, the outer surface of the right grab portion 42R curves and smoothly continues to the curving outer surface of the second right side cover 32R.

The middle grab portion 43 is located between the left grab portion 42L and the right grab portion 42R in the vehicle width direction. The middle grab portion 43 couples the left grab portion 42L and the right grab portion 42R. In the vehicle plan view, the middle grab portion 43 is disposed behind the seat 6. In the vehicle plan view, the middle grab portion 43 is located forward of the rear end 422L of the left grab portion 42L and the rear end 422R of the right grab portion 42R. As shown in FIG. 3, at least portion of the middle grab portion 43 is located higher than the seat 6.

The grab bar 41 includes a left attachment portion 44L and a right attachment portion 44R. The left attachment portion 44L and the right attachment portion 44R are attached to the seat frame 14. When described in detail, as shown in FIG. 5, the seat frame 14 includes a left seat frame 14L and a right seat frame 14R. The left attachment portion 44L is attached to the left seat frame 14L. The right attachment portion 44R is attached to the right seat frame 14R.

The left attachment portion 44L is attached to the left seat frame 14L through a left bracket 38L shown in FIG. 7. The right attachment portion 44R is attached to the right seat frame 14R through a right bracket 38R.

As shown in FIG. 6, the right bracket 38R is disposed on the right seat frame 14R. The right bracket 38R upwardly extends from the right seat frame 14R. The right attachment portion 44R is attached to the right bracket 38R in a higher position than the right seat frame 14R.

Similarly to the right bracket 38R, the left bracket 38L is disposed on the left seat frame 14L. The left bracket 38L upwardly extends from the left seat frame 14L. The left attachment portion 44L is attached to the left bracket 38L in a higher position than the left seat frame 14L.

As shown in FIGS. 8 to 10, the left attachment portion 44L includes a left flange portion 45L and a left coupling portion 46L. The left flange portion 45L includes holes 451L. The left coupling portion 46L couples the left flange portion 45L and the left grab portion 42L. The right attachment portion 44R includes a right flange portion 45R and a right coupling portion 46R. The right flange portion 45R includes holes 451R. The right coupling portion 46R couples the right flange portion 45R and the right grab portion 42R.

As shown in FIG. 7, holes 381L are provided in the upper surface of the left bracket 38L and are located in corresponding positions to the holes 451L of the left flange portion 45L. Holes 381R are provided in the upper surface of the right bracket 38R and are located in corresponding positions to the holes 451R of the right flange portion 45R. The left attachment portion 44L is fixed to the left bracket 38L by inserting bolts 39L shown in FIG. 5 into the holes 381L of the left bracket 38L through the holes 451L of the left flange portion 45L. The right attachment portion 44R is fixed to the right bracket 38R by inserting bolts 39R shown in FIG. 5 into the holes 381R of the right bracket 38R through the holes 451R of the right flange portion 45R.

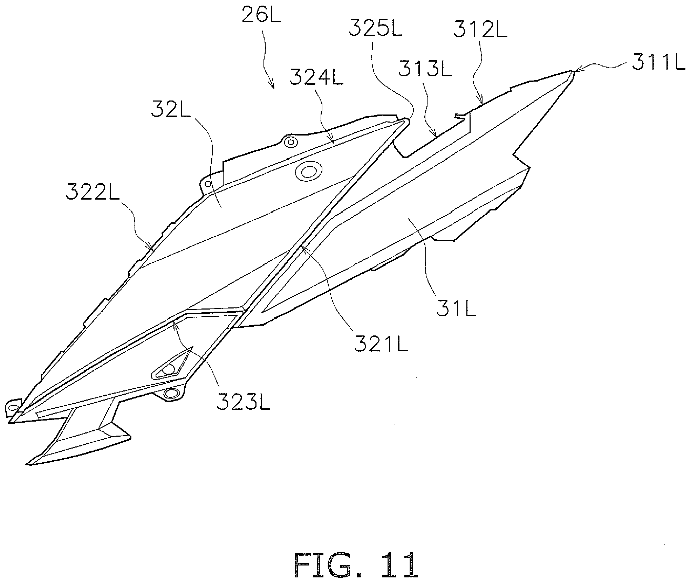

FIG. 11 is a side view of the left side cover assembly 26L. As shown in FIG. 11, the first left side cover 31L includes a left cutout 313L downwardly recessed from an upper edge 312L of the first left side cover 31L. The bottom of the left cutout 313L forwardly tilts down. In the vehicle side view, a rear end 325L of the second left side cover 32L is disposed over the left cutout 313L. The rear end 325L of the second left side cover 32L is located backward of the front end of the left cutout 313L.

The aforementioned left flange portion 45L is disposed lower than the upper edge 312L of the first left side cover 31L. The left flange portion 45L is disposed lower than the left cutout 313L.

As shown in FIG. 5, in the vehicle plan view, at least portion of the second left side cover 32L overlaps with the left attachment portion 44L. When described in detail, in the vehicle plan view, the rear end 325L of the second left side cover 32L overlaps with portion of the left attachment portion 44L. In the vehicle plan view, the rear end 325L of the second left side cover 32L overlaps with portion of the left coupling portion 46L.

As shown in FIG. 7, in the vehicle plan view, at least portion of the second left side cover 32L overlaps with the left cutout 313L. When described in detail, in the vehicle plan view, the rear end 325L of the second left side cover 32L overlaps with portion of the left cutout 313L.

As shown in FIG. 3, the left grab portion 42L includes a left front grab portion 47L. The left front grab portion 47L is a portion of the left grab portion 42L and is located forward of the rear end 601 of the seat 6 in the vehicle side view. The left front grab portion 47L extends obliquely downward to the front.

In the vehicle side view, the front edge 423L of the left front grab portion 47L forwardly tilts down. The front edge 423L of the left front grab portion 47L corresponds to the front edge 423L of the aforementioned left grab portion 42L. In the vehicle side view, the rear edge 321L of the second left side cover 32L is opposed to the front edge 423L of the left front grab portion 47L and forwardly tilts down.

In the vehicle side view, the rear edge 321L of the second left side cover 32L extends to a position lower than and forward of the front edge 423L of the left front grab portion 47L. In the vehicle side view, an extended line of the front edge 423L of the left front grab portion 47L at least intersects with the left tandem step 34L of the retracted state. In the vehicle side view, the extended line of the front edge 423L of the left front grab portion 47L may intersect with the left tandem step 34L of the deployed state.

As shown in FIG. 3, in the vehicle side view, the rear end 325L of the second left side cover 32L is located between the seat 6 and the left front grab portion 47L. The front end 421L of the left front grab portion 47L is located forward of the rear end 325L of the second left side cover 32L. In the vehicle side view, at least portion of the left front grab portion 47L overlaps with the left cutout 313L. When described in detail, the left front grab portion 47L overlaps at its portion coupled to the aforementioned left coupling portion 46L with the left cutout 313L.

The left front grab portion 47L extends to a position forward of the left cutout 313L. The front end 421L of the left front grab portion 47L is located lower than the left cutout 313L.

The left attachment portion 44L is disposed in the left cutout 313L. When described in detail, the left flange portion 45L is located lower than the bottom of the left cutout 313L, whereas the left coupling portion 46L is disposed to extend through the left cutout 313L. In the vehicle side view, the left coupling portion 46L overlaps with the left front grab portion 47L and the first left side cover 31L.

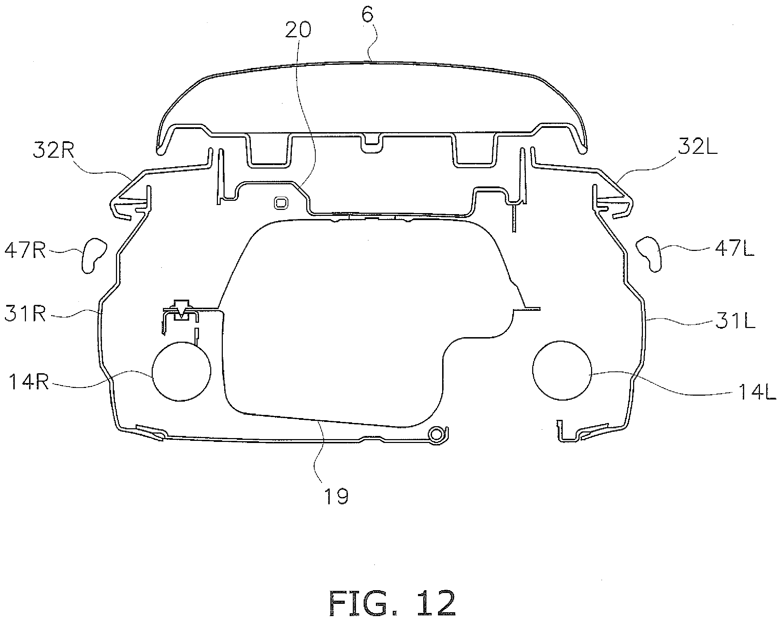

FIG. 12 is a cross-sectional view of FIG. 3 taken along line XII-XII. As shown in FIG. 12, the left front grab portion 47L is disposed on the left of the first left side cover 31L. The left front grab portion 47L is separated from the first left side cover 31L through a gap. It should be noted that as shown in FIG. 12, the fuel tank 19 is disposed between the first left side cover 31L and the first right side cover 31R. The inner cover 20 is disposed over the fuel tank 19. The fuel tank 19 and the inner cover 20 are disposed under the seat 6.

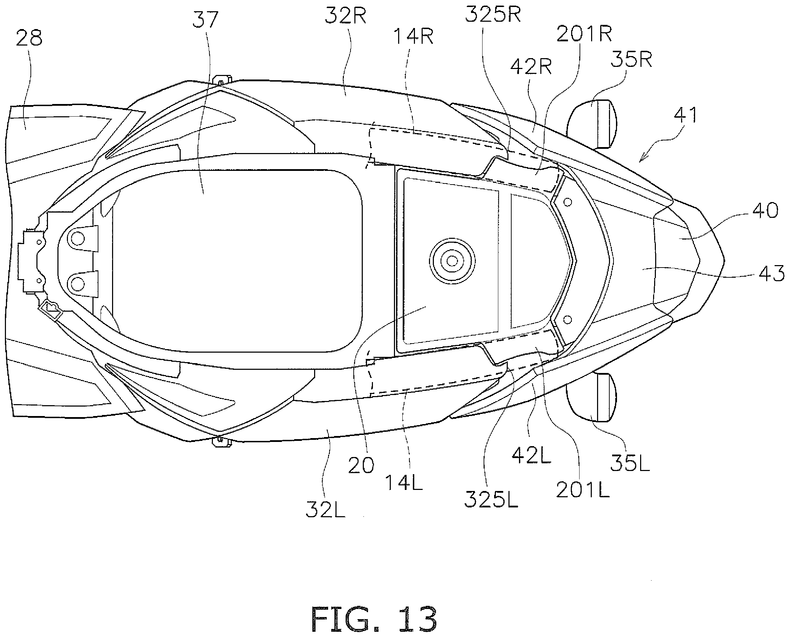

FIG. 13 is a top view of the rear portion of the straddled vehicle 1 to which the inner cover 20 is attached without illustration of the seat 6. In the vehicle plan view, the inner cover 20 is disposed behind the storage 37. In the vehicle plan view, the inner cover 20 is disposed in front of the tail light cover 40. In the vehicle plan view, the inner cover 20 is disposed between the left front grab portion 47L and a right front grab portion 47R. In the vehicle plan view, the inner cover 20 is disposed between the second left side cover 32L and the second right side cover 32R.

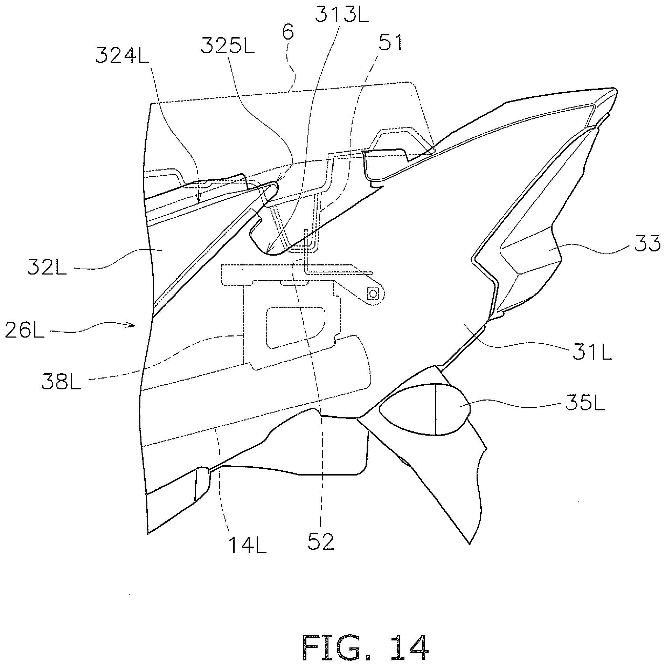

FIG. 14 is a left side view of the rear portion of the straddled vehicle 1 without illustration of the grab bar 41. As shown in FIG. 14, a seat lock latch 51 and a seat lock catch 52 are disposed in a space enclosed by the right and left side cover assemblies 26R and 26L. The seat lock latch 51 is attached to the bottom surface of the seat 6.

The seat lock catch 52 is attached to the seat frame 14. The seat lock catch 52 is provided to be engageable with the seat lock latch 51. When described in detail, as shown in FIG. 5, a cross member 29 is attached to the right and left seat frames 14R and 14L. A bracket 30 is attached to the cross member 29. The seat lock catch 52 is attached to the right and left seat frames 14R and 14L through the bracket 30 and the cross member 29.

As shown in FIG. 14, the lower end of the left cutout 313L is located lower than the position in which the seat lock latch 51 and the seat lock catch 52 are engaged. In the vehicle side view, at least portion of the seat lock latch 51 overlaps with the left cutout 313L. In the vehicle side view, at least portion of the seat lock catch 52 overlaps with the left cutout 313L. Therefore, in the vehicle side view, at least portion of the seat lock latch 51 overlaps with the left front grab portion 47L. In the vehicle side view, at least portion of the seat lock catch 52 overlaps with the left front grab portion 47L. In the vehicle side view, a gap produced among the seat 6, the left front grab portion 47L and the second left side cover 32L is at least partially closed by a right flange portion 201R and a left flange portion 201L (see FIG. 13). The right and left flange portions 201 and 201L respectively protrude from the right and left sidewalls of the inner cover 20.

As shown in FIG. 4, in the vehicle side view, the right grab portion 42R includes the right front grab portion 47R located forward of the rear end 601 of the seat 6. As shown in FIG. 7, the first right side cover 31R includes a right cutout 313R downwardly recessed from the upper edge of the first right side cover 31R. The right and left grab portions 42R and 42L of the grab bar 41 are provided bilaterally symmetric to each other. Additionally, the right and left side cover assemblies 26R and 26L are provided bilaterally symmetric to each other.

Therefore, the shapes of the right front grab portion 47R, the first right side cover 31R, the second right side cover 32R, the right cutout 313R and the right attachment portion 44R and the positional arrangement among them are bilaterally symmetric to, but except for this, similar to the shapes of the left front grab portion 47L, the first left side cover 31L, the second left side cover 32L, the left cutout 313L and the left attachment portion 44L and the positional arrangement among them. Additionally, the shapes of the right cutout 313R and the right front grab portion 47R and the positional arrangement among the right cutout 313R, the right front grab portion 47R, the seat lock latch 51 and the seat lock catch 52 are bilaterally symmetric to, but except for this, similar to the shapes of the left cutout 313L and the left front grab portion 47L and the positional arrangement among the left cutout 313L, the left front grab portion 47L, the seat lock latch 51 and the seat lock catch 52.

In the aforementioned straddled vehicle 1 according to the present preferred embodiment, the left attachment portion 44L of the grab bar 41 is disposed in the left cutout 313L, whereas the right attachment portion 44R of the grab bar 41 is disposed in the right cutout 313R. Therefore, the right and left front grab portions 47R and 47L of the grab bar 41 can be disposed lower than those in a construction that the cutouts 313R and 313L are not provided. This makes the legs of the tandem passenger unlikely to make contact with the right and left front grab portions 47R and 47L. Accordingly, comfortableness of the tandem passenger can be enhanced.

Additionally, increase in manufacturing cost can be inhibited in comparison with a construction that the right and left first side covers 31R and 31L are provided with holes for attaching the grab bar 41. Moreover, when detached from the vehicle, the right and left first side covers 31R and 31L can be detached separately from the grab bar 41. Hence, degradation in maintenance performance can be inhibited.

In the straddled vehicle 1 according to the present preferred embodiment, at least portion of the gap produced by the left cutout 313L can be covered with the second left side cover 32L. Likewise, at least portion of the gap produced by the right cutout 313R can be covered with the second right side cover 32R. Accordingly, intrusion of foreign objects into the vehicle can be inhibited. Additionally, it is difficult to access the seat lock latch 51 and the seat lock catch 52. Hence, quality of crime prevention can be enhanced.

Moreover, the second left side cover 32L is disposed over the left front grab portion 47L. Hence, the second left side cover 32L makes the left leg of the tandem passenger further unlikely to make contact with the left front grab portion 47L. Likewise, the second right side cover 32R is disposed over the right front grab portion 47R. Hence, the second right side cover 32R makes the right leg of the tandem passenger further unlikely to make contact with the right front grab portion 47R. Accordingly, comfortableness of the tandem passenger can be further enhanced.

In a vehicle side view, at least portion of the left front grab portion 47L overlaps with the left cutout 313L. In the vehicle side view, at least portion of the right front grab portion 47R overlaps with the right cutout 313R. Therefore, the gap produced by the left cutout 313L can be covered with the second left side cover 32L and the left front grab portion 47L. On the other hand, the gap produced by the right cutout 313R can be covered with the second right side cover 32R and the right front grab portion 47R.

The left front grab portion 47L and the right front grab portion 47R extend obliquely downward to the front. The bottom of the left cutout 313L and that of the right cutout 313R forwardly tilt down. In other words, the left front grab portion 47L and the left cutout 313L extend in approximately the same direction. Therefore, the gap produced by the left cutout 313L is easily covered with the left front grab portion 47L. On the other hand, the right front grab portion 47R and the right cutout 313R extend in approximately the same direction. Therefore, the gap produced by the right cutout 313R is easily covered with the right front grab portion 47R.

The left attachment portion 44L is located lower than the upper edge 312L of the first left side cover 31L. The right attachment portion 44R is located lower than the upper edge of the first right side cover 31R. In this case, even when the right and left attachment portions 44R and 44L are disposed in low positions as described above, elongation of the right and left attachment portions 44R and 44L can be inhibited by the right and left cutouts 313R and 313L herein provided.

The rear edge 321L of the second left side cover 32L is opposed to the front edge 423L of the left front grab portion 47L, and simultaneously, tilts in approximately the same direction as the front edge 423L. Hence, the second left side cover 32L and the left front grab portion 47L can be disposed in smooth continuation to each other. The construction can make the left leg of the tandem passenger unlikely to make contact with the left front grab portion 47L. Additionally, a rear edge 321R of the second right side cover 32R is opposed to the front edge 423R of the right front grab portion 47R, and simultaneously, tilts in approximately the same direction as the front edge 423R. Hence, the second right side cover 32R and the right front grab portion 47R can be disposed in smooth continuation to each other. The construction can make the right leg of the tandem passenger unlikely to make contact with the right front grab portion 47R.

One preferred embodiment of the present invention has been explained above. However, the present invention is not limited to the aforementioned preferred embodiment, and a variety of changes can be made without departing from the scope of the present invention.

The term "straddled vehicle" encompasses a motorcycle, an all-terrain vehicle and a snowmobile. The term "motorcycle" is not limited to the scooter-type vehicle according to the aforementioned preferred embodiment, and may encompasses other types of vehicle such as a moped.

The constructions of the right and left side cover assemblies 26R and 26L may be changed. For example, the shapes or the positional arrangements of the right and left first side covers 31R and 31L may be changed. The shapes or the positional arrangements of the right and left second side covers 32R and 32L may be changed. The shapes or the positional arrangements of the right and left cutouts 313R and 313L may be changed.

The construction of the grab bar 41 may be changed. For example, the shapes or the positional arrangements of the right and left grab portions 42R and 42L may be changed. The middle grab portion 43 may not be provided. The shape or the positional arrangement of either the seat lock latch 51 or the seat lock catch 52 may be changed.

In the vehicle plan view, the entirety of the second left side cover 32L may overlap with the left cutout 313L. In the vehicle plan view, the entirety of the second right side cover 32R may overlap with the right cutout 313R. In a vehicle side view, the entirety of the second left side cover 32L may be disposed over the left front grab portion 47L. In the vehicle side view, the entirety of the second right side cover 32R may be disposed over the right front grab portion 47R.

In a vehicle side view, the entirety of the left front grab portion 47L may overlap with the left cutout 313L. In the vehicle side view, the entirety of the right front grab portion 47R may overlap with the right cutout 313R.

The terms and expressions, as used herein, are provided for the purpose of explanation, not of limitation to interpretation. It is to be recognized that there is no intention to exclude any equivalents of the features herein illustrated and described, and various modifications are possible within the scope claimed in the present invention. The present invention can be embodied in many different forms. The present disclosure should be considered to provide the principle embodiments of the present invention. Those embodiments are herein described with the understanding of not intending to limit the present invention to the embodiments herein described and/or illustrated. Thus, the present invention is not to be limited to those embodiments herein described. The present invention even encompasses all the embodiments including equivalent elements, modifications, deletions, combinations, improvements and/or changes, which could be recognized by a person skilled in the art based on the present disclosure and covered by the claims. A limitation in a claim should be broadly interpreted based on terms used in the claim, and should not be limited to any of the embodiments described in the present specification or during prosecution of the present application.

## Claims

1. A straddled vehicle (1), comprising:
a seat frame (14);
a seat (6) disposed over the seat frame (14), the seat (6) being supported by the seat frame (14);
a grab bar (41) configured to be grabbed by a tandem passenger;
a left side cover assembly (26L) disposed leftward of the seat frame (14); and
a right side cover assembly (26R) disposed rightward of the seat frame (14), wherein
the grab bar (41) includes
a left attachment portion (44L) attached to the seat frame (14),
a left front grab portion (47L) located forward of a rear end of the seat (6) in a vehicle side view,
a right attachment portion (44R) attached to the seat frame (14), and
a right front grab portion (47R) located forward of the rear end (601) of the seat (6) in the vehicle side view,
the left side cover assembly (26) includes
a first left side cover (31L), and
a second left side cover (32L) provided separately from the first left side cover (31L), the second left side cover (32L) being disposed in front of the first left side cover (31L), the second left side cover (32L) being connected to the first left side cover (31L),
the right side cover assembly (26R) includes
a first right side cover (31R), and
a second right side cover (32R) provided separately from the first right side cover (31R), the second right side cover (32R) being disposed in front of the first right side cover (31R), the second right side cover (32R) being connected to the first right side cover (31R),
the second left side cover (32L) is at least partially disposed over the left front grab portion (47L) in the vehicle side view, and
the second right side cover (32R) is at least partially disposed over the right front grab portion (47R) in the vehicle side view,
**characterised in that** the first left side cover (31L) includes a left cutout (313L) downwardly recessed from an upper edge (312L) of the first left side cover (31L),
the first right side cover (31R) includes a right cutout (313R) downwardly recessed from an upper edge (312R) of the first right side cover (31R),
the left attachment portion (44L) is disposed in the left cutout (313L),
the right attachment portion (44R) is disposed in the right cutout (313R),
the second left side cover (32L) at least partially overlaps with the left cutout (313L) in a vehicle plan view, and the second right side cover (32R) at least partially overlaps with the right cutout (313R) in the vehicle plan view.

2. The straddled vehicle (1) according to claim 1, wherein
the left front grab portion (47L) at least partially overlaps with the left cutout (313L) in the vehicle side view, and
the right front grab portion (47R) at least partially overlaps with the right cutout (313R) in the vehicle side view.

3. The straddled vehicle (1) according to claim 1 or 2, wherein
a front end (421L) of the left front grab portion (47L) is located forward of a rear end (325L) of the second left side cover (32L), and
a front end (421R) of the right front grab portion (47R) is located forward of a rear end (325R) of the second right side cover (32R).

4. The straddled vehicle (1) according to any of claims 1 to 3, wherein
the rear end (325L) of the second left side cover (32L) is located between the seat (6) and the left front grab portion (47L) in the vehicle side view, and
the rear end (325R) of the second right side cover (32R) is located between the seat (6) and the right front grab portion (47R) in the vehicle side view.

5. The straddled vehicle (1) according to any of claims 1 to 4, wherein
the left front grab portion (47L) and the right front grab portion (47R) extend obliquely downward to front, and
a bottom of the left cutout (313L) and a bottom of the right cutout (313R) forwardly tilt down.

6. The straddled vehicle (1) according to any of claims 1 to 5, wherein
the left attachment portion (44L) is located lower than the upper edge (312L) of the first left side cover (31L), and
the right attachment portion (44R) is located lower than the upper edge (312R) of the first right side cover (31R).

7. The straddled vehicle (1) according to any of claims 1 to 6, further comprising:
a seat lock latch (51) attached to the seat (6); and
a seat lock catch (52) attached to the seat frame (14), the seat lock catch (52) being engageable with the seat lock latch (51), wherein
a lower end of the left cutout (313L) and a lower end of the right cutout (313R) are located lower than a position in which the seat lock latch (51) and the seat lock catch (52) are engaged.

8. The straddled vehicle (1) according to any of claims 1 to 6, further comprising:
a seat lock latch (51) attached to the seat (6); and
a seat lock catch (52) attached to the seat frame (14), the seat lock catch (52) being engageable with the seat lock latch (51), wherein
the seat lock latch (51) at least partially overlaps with the left cutout (313L) in the vehicle side view, and
the seat lock latch (51) at least partially overlaps with the right cutout (313R) in the vehicle side view.

9. The straddled vehicle (1) according to any of claims 1 to 8, wherein
a front edge (423L) of the left front grab portion (47L) forwardly tilts down in the vehicle side view,
a rear edge (321L) of the second left side cover (32L) is opposed to the front edge (423L) of the left front grab portion (47L) and forwardly tilts down in the vehicle side view,
a front edge (423R) of the right front grab portion (47R) forwardly tilts down in the vehicle side view, and
a rear edge (321R) of the second right side cover (32R) is opposed to the front edge (423R) of the right front grab portion (47R) and forwardly tilts down in the vehicle side view.

## Patentansprüche

1. Spreizsitz-Fahrzeug (1), das umfasst:
einen Sitz-Rahmen (14);
einen Sitz (6), der über dem Sitz-Rahmen (14) angeordnet ist, wobei der Sitz (6) von dem Sitz-Rahmen (14) getragen wird;
einen Griff-Bügel (41), der zum Greifen durch einen Sozius eingerichtet ist;
eine linke Seitenverkleidungs-Anordnung (26L), die links von dem Sitz-Rahmen (14) angeordnet ist; sowie
eine rechte Seitenverkleidungs-Anordnung (26R), die rechts von dem Sitz-Rahmen (14) angeordnet ist, wobei
der Griff-Bügel (41) enthält:
einen linken Anbringungs-Abschnitt (44L), der an dem Sitz-Rahmen (14) angebracht ist,
einen linken vorderen Griff-Abschnitt (47L), der, in einer Seitenansicht des Fahrzeugs, vor einem hinteren Ende des Sitzes (6) angeordnet ist,
einen rechten Anbringungsabschnitt (44R), der an dem Sitz-Rahmen (14) angebracht ist, sowie
einen rechten vorderen Griff-Abschnitt (47R), der, in der Seitenansicht des Fahrzeugs, vor dem hinteren Ende (601) des Sitzes (6) angeordnet ist,
die linke Seitenverkleidungs-Anordnung (26) enthält:
eine erste linke Seitenverkleidung (31L), sowie
eine zweite linke Seitenverkleidung (32L), die separat von der ersten linken Seitenverkleidung (31L) vorhanden ist, wobei die zweite linke Seitenverkleidung (32L) vor der ersten linken Seitenverkleidung (31L) angeordnet ist und die zweite linke Seitenverkleidung (32L) mit der ersten linken Seitenverkleidung (31L) verbunden ist,
die rechte Seitenverkleidungs-Anordnung (26R) enthält:
eine erste rechte Seitenverkleidung (31R), sowie
eine zweite rechte Seitenverkleidung (32R), die separat von der ersten rechten Seitenverkleidung (31R) vorhanden ist, wobei die zweite rechte Seitenverkleidung (32R) vor der ersten rechten Seitenverkleidung (31R) angeordnet ist und die zweite rechte Seitenverkleidung (32R) mit der ersten rechten Seitenverkleidung (31R) verbunden ist,
die zweite linke Seitenverkleidung (32L), in der Seitenansicht des Fahrzeugs, wenigstens teilweise über dem linken vorderen Griff-Abschnitt (47L) angeordnet ist, und
die zweite rechte Seitenverkleidung (32R), in der Seitenansicht des Fahrzeugs, wenigstens teilweise über dem rechten vorderen Griff-Abschnitt (47R) angeordnet ist.
**dadurch gekennzeichnet, dass**
die erste linke Seitenverkleidung (31L) einen linken Ausschnitt (313L) enthält, der von einer Oberkante (312L) der ersten linken Seitenverkleidung (31L) nach unten ausgespart ist,
die erste rechte Seitenverkleidung (31R) einen rechten Ausschnitt (313R) enthält, der von einer Oberkante (312R) der ersten rechten Seitenverkleidung (31R) nach unten ausgespart ist,
der linke Anbringungs-Abschnitt (44L) in dem linken Ausschnitt (313L) angeordnet ist,
der rechte Anbringungs-Abschnitt (44R) in dem rechten Ausschnitt (313R) angeordnet ist,
die zweite linke Seitenverkleidung (32L), in einer Draufsicht auf das Fahrzeug, sich wenigstens teilweise mit dem linken Ausschnitt (313L) überlappt, und
die zweite rechte Seitenverkleidung (32R), in der Draufsicht auf das Fahrzeug, sich wenigstens teilweise mit dem rechten Ausschnitt (313R) überlappt.

2. Spreizsitz-Fahrzeug (1) nach Anspruch 1, wobei
der linke vordere Griff-Abschnitt (47L), in der Seitenansicht des Fahrzeugs, sich wenigstens teilweise mit dem linken Ausschnitt (313L) überlappt, und
der rechte vordere Griff-Abschnitt (47R), in der Seitenansicht des Fahrzeugs, sich wenigstens teilweise mit dem rechten Ausschnitt (313R) überlappt.

3. Spreizsitz-Fahrzeug (1) nach Anspruch 1 oder 2, wobei
ein vorderes Ende (421L) des linken vorderen Griff-Abschnitts (47L) vor einem hinteren Ende (325L) der zweiten linken Seitenverkleidung (32L) angeordnet ist, und
ein vorderes Ende (421R) des rechten vorderen Griff-Abschnitts (47R) vor einem hinteren Ende (325R) der zweiten rechten Seitenverkleidung (32R) angeordnet ist.

4. Spreizsitz-Fahrzeug (1) nach einem der Ansprüche 1 bis 3, wobei
das hintere Ende (325L) der zweiten linken Seitenverkleidung (32L), in der Seitenansicht des Fahrzeugs, zwischen dem Sitz (6) und dem linken vorderen Griff-Abschnitt (47L) angeordnet ist, und
das hintere Ende (325R) der zweiten rechten Seitenverkleidung (32R), in der Seitenansicht des Fahrzeugs, zwischen dem Sitz (6) und dem rechten vorderen Griff-Abschnitt (47R) angeordnet ist.

5. Spreizsitz-Fahrzeug (1) nach einem der Ansprüche 1 bis 4, wobei
der linke vordere Griff-Abschnitt (47L) und der rechte vordere Griff-Abschnitt (47R) sich zur Vorderseite schräg nach unten erstrecken, und
ein Boden des linken Ausschnitts (313L) und ein Boden des rechten Ausschnitts (313R) vorwärts nach unten geneigt sind.

6. Spreizsitz-Fahrzeug (1) nach einem der Ansprüche 1 bis 5, wobei
der linke Anbringungsabschnitt (44L) tiefer liegt als die Oberkante (312L) der ersten linken Seitenverkleidung (31L), und
der rechte Anbringungsabschnitt (44R) tiefer liegt als die Oberkante (312R) der ersten rechten Seitenverkleidung (31R).

7. Spreizsitz-Fahrzeug (1) nach einem der Ansprüche 1 bis 6, das des Weiteren umfasst:
eine Sitz-Arretierverriegelung (51), die an dem Sitz (6) angebracht ist; sowie
einen Sitz-Arretierriegel (52), der an dem Sitz-Rahmen (14) angebracht ist, wobei der Sitz-Arretierriegel (52) mit der Sitz-Arretierverriegelung (51) in Eingriff gebracht werden kann,und
ein unteres Ende des linken Ausschnitts (313L) sowie ein unteres Ende des rechten Ausschnitts (313R) tiefer liegen als eine Position, an der die Sitz-Arretierverriegelung (51) und der Sitz-Arretierriegel (52) in Eingriff sind.

8. Spreizsitz-Fahrzeug (1) nach einem der Ansprüche 1 bis 6, das des Weiteren umfasst:
eine Sitz-Arretierverriegelung (51), die an dem Sitz (6) angebracht ist; sowie
einen Sitz-Arretierriegel (52), der an dem Sitz-Rahmen (14) angebracht ist, wobei der Sitz-Arretierriegel (52) mit der Sitz-Arretierverriegelung (51) in Eingriff gebracht werden kann,und
die Sitz-Arretierverriegelung (51), in der Seitenansicht des Fahrzeugs, sich wenigstens teilweise mit dem linken Ausschnitt (313L) überlappt, und
die Sitz-Arretierverriegelung (51), in der Seitenansicht des Fahrzeugs, sich wenigstens teilweise mit dem rechten Ausschnitt (313R) überlappt.

9. Spreizsitz-Fahrzeug (1) nach einem der Ansprüche 1 bis 8, wobei
eine Vorderkante (423L) des linken vorderen Griff-Abschnitts (47L), in der Seitenansicht des Fahrzeugs, vorwärts nach unten geneigt ist,
eine Hinterkante (321L) der zweiten linken Seitenverkleidung (32L), in der Seitenansicht des Fahrzeugs, der Vorderkante (423L) des linken vorderen Griff-Abschnitts (47L) gegenüberliegt und vorwärts nach unten geneigt ist,
eine Vorderkante (423R) des rechten vorderen Griff-Abschnitts (47R), in der Seitenansicht des Fahrzeugs, vorwärts nach unten geneigt ist, und
eine Hinterkante (321R) der zweiten rechten Seitenverkleidung (32R), in der Seitenansicht des Fahrzeugs, der Vorderkante (423R) des rechten vorderen Griff-Abschnitts (47R) gegenüberliegt und vorwärts nach unten geneigt ist.

## Revendications

1. Véhicule monté à califourchon (1), comprenant:
un châssis de siège (14);
un siège (6) disposé sur le châssis de siège (14), le siège (6) étant supporté par le châssis de siège (14);
une barre d'appui (41) configurée pour être saisie par un passager tandem;
un ensemble capot latéral gauche (26L) disposé à gauche du châssis de siège (14); et
un ensemble capot latéral droit (26R) disposé à droite du châssis de siège (14), dans lequel
la barre d'appui (41) comprend
une partie de fixation gauche (44L) fixée au châssis de siège (14),
une partie d'appui avant gauche (47L) située en avant d'une extrémité arrière du siège (6) dans une vue latérale du véhicule,
une partie de fixation gauche (44L) fixée au châssis de siège (14), et une partie d'appui avant droite (47L) située en avant d'une extrémité arrière (601) du siège (6) dans une vue latérale du véhicule,
l'ensemble capot latéral gauche (26) comprend
un premier capot latéral gauche (31L), et
un second capot latéral gauche (32L) prévu séparément du premier capot latéral gauche (31L), le second capot latéral gauche (32L) étant disposé devant le premier capot latéral gauche (31L), le second capot latéral gauche (32L) étant relié au premier capot latéral gauche (31L),
l'ensemble capot latéral droite (26R) comprend
un premier capot latéral droite (31R), et
un second capot latéral droite (32R) prévu séparément du premier capot latéral droit (31R), le second capot latéral droite (32R) étant disposé devant le premier capot latéral droit (31R), le second capot latéral droit (32R) étant relié au premier capot latéral droit (31R),
le second panneau latéral gauche (32L) est au moins partiellement disposé sur la partie d'appui avant gauche (47L) dans la vue latérale du véhicule, et le second capot latéral droit (32R) est au moins partiellement disposé sur la partie d'appui avant droite (47R) dans la vue latérale du véhicule,
**caractérisé en ce que**
le premier capot latéral gauche (31L) comprend une découpe gauche (313L) vers le bas à partir d'un bord supérieur (312L) du premier capot latéral gauche (31L),
le premier capot latéral droit (31R) comprend une découpe droite (313R) en retrait vers le bas par rapport à un bord supérieur (312R) du premier capot latéral droit (31R),
la partie de fixation gauche (44L) est disposée dans la découpe gauche (313L), la partie de fixation droite (44R) est disposée dans la découpe droite (313R),
le second capot latéral gauche (32L) chevauche au moins partiellement la découpe gauche (313L) dans une vue en plan de véhicule, et
le second capot latéral droit (32R) chevauche au moins partiellement la découpe droite (313L) dans une vue latérale de véhicule.

2. Véhicule à califourchon (1) selon la revendication 1, dans lequel
la partie d'appui avant gauche (47L) chevauche au moins partiellement la découpe gauche (313L) dans la vue latérale du véhicule, et
la partie d'appui avant droite (47R) chevauche au moins partiellement la découpe droite (313R) dans la vue latérale du véhicule.

3. Véhicule à califourchon (1) selon les revendications 1 ou 2, dans lequel
une extrémité avant (421L) de la partie d'appui avant gauche (47L) est située en avant d'une extrémité arrière (325L) du second capot latéral gauche (32L), et
une extrémité avant droite (421R) de la partie d'appui avant droite (47R) est située en avant d'une extrémité arrière (325R) du second capot latéral droit (32R).

4. Véhicule à califourchon (1) selon les revendications 1 à 3, dans lequel
l'extrémité arrière (325L) du second capot latéral gauche (32L) est située entre le siège (6) et la partie d'appui avant gauche (47L) dans la vue latérale du véhicule, et
l'extrémité arrière (325R) du second capot latéral droit (32R) est située entre le siège (6) et la partie d'appui avant droite (47R) dans la vue latérale du véhicule.

5. Véhicule à califourchon (1) selon les revendications 1 à 4, dans lequel
la partie d'appui avant gauche (47L) et la partie d'appui avant droite (47R) s'étendent obliquement en descendant vers l'avant, et
un fond de la découpe gauche (313L) et un fond de la découpe droite (313R) s'inclinent vers le bas.

6. Véhicule à califourchon (1) selon les revendications 1 à 5, dans lequel
la partie de fixation gauche (44L) est située plus bas que le bord supérieur (312L) du premier capot latéral gauche (31L), et
la partie de fixation droite (44R) est située plus bas que le bord supérieur (312R) du premier capot latéral droit (31R).

7. Véhicule à califourchon (1) selon l'une quelconque des revendications 1 à 6, comprenant en outre:
un loquet de verrouillage de siège (51) fixé au siège (6); et
un loquet de verrouillage de siège (52) fixé au châssis de siège (14), le loquet de verrouillage de siège (52) pouvant se mettre en prise avec le loquet de verrouillage de siège (51), dans lequel
une extrémité inférieure de la découpe gauche (313L) et une extrémité inférieure de la découpe droite (313R) sont situées plus bas qu'une position dans laquelle le loquet de verrouillage de siège (51) et le loquet de verrouillage de siège (52) sont en prise.

8. Véhicule à califourchon (1) selon l'une quelconque des revendications 1 à 6, comprenant en outre:
un loquet de verrouillage de siège (51) fixé au siège (6); et
un loquet de verrouillage de siège (52) fixé au châssis de siège (14), le loquet de verrouillage de siège (52) pouvant se mettre en prise avec le loquet de verrouillage de siège (51), dans lequel
le loquet de verrouillage de siège (51) chevauche au moins partiellement la découpe gauche (313L) dans la vue latérale du véhicule, et
le loquet de verrouillage de siège (51) chevauche au moins partiellement la découpe droite (313R) dans la vue latérale du véhicule.

9. Véhicule à califourchon (1) selon les revendications 1 à 8, dans lequel
un bord avant (423L) de la partie d'appui avant gauche (47L) s'incline vers le bas dans la vue latérale du véhicule,
un bord arrière (321L) du second capot latéral gauche (32L) est opposé au bord avant (423L) de la partie d'appui avant gauche (47L) et s'incline vers l'avant dans la vue latérale du véhicule,
un bord avant (423R) de la partie d'appui avant droite (47R) s'incline vers le bas dans la vue latérale du véhicule, et
un bord arrière (321R) du second capot latéral droit (32R) est opposé au bord avant (423R) de la partie d'appui avant droit (47R) et s'incline vers l'avant dans la vue latérale du véhicule.
